# EUROPEAN PATENT APPLICATION

(11) **EP 3 709 150 A1**
(43) Date of publication of application: **16.09.2020**
(21) Application number: 20151605.1
(22) Date of filing: 14.01.2020
(51) Int. Cl.: G06F 3/12

(54) **PRINTING CONTROL DEVICE AND CONTROL METHOD**

(30) Priority: 14.03.2019 US 201916352949
(71) Applicant: Toshiba TEC Kabushiki Kaisha, Shinagawa-ku Tokyo 141-8562 (JP)
(72) Inventor: Takato, Jun, Shinagawa-ku, Tokyo 141-8562 (JP)
(74) Representative: Bandpay & Greuter

(57) **Abstract**

According to one embodiment, a printing control device includes a processor. The processor puts a job input by a first user into an interruption state when a specific condition is satisfied. The processor puts the job in the interruption state into a deletion state when an elapsed time after putting the job into the interruption state is equal to or longer than a predetermined time and a second user different from the first user is being logged in.

## Description

### FIELD

Embodiments described herein relate generally to a printing control device and a control method.

### BACKGROUND

An image forming device such as a printer has a function of automatically deleting an interruption job when time elapses.

### DESCRIPTION OF THE DRAWINGS

FIG. 1 is a block diagram illustrating an example of a main circuit configuration of an image forming device according to an embodiment;
FIG. 2 is a flow chart illustrating an example of a process performed by a processor in FIG. 1;
FIG. 3 is a flow chart illustrating an example of a process performed by the processor;
FIG. 4 is a flow chart illustrating an example of a process performed by the processor;
FIG. 5 is a flow chart illustrating an example of a process performed by the processor; and
FIG. 6 is a diagram illustrating an example of a screen displayed on a touch panel in FIG. 1.

### DETAILED DESCRIPTION

In general, according to one embodiment, a printing control device includes a processor. When a specific condition is satisfied, the processor puts a job input by a first user into an interruption state. When an elapsed time after putting the job into the interruption state is equal to or longer than a predetermined time, and when a second user different from the first user is being logged in, the process puts the job in the interruption state into a deletion state.

Preferably, the processor does not automatically put the job in the interruption state into the deletion state when the elapsed time after putting the job into the interruption state is equal to or longer than the predetermined time and the second user is not logged in.

Preferably, the processor automatically puts the job in the interruption state into the deletion state when the first user is a predetermined specific user, the elapsed time after putting the job into the interruption state is equal to or longer than the predetermined time, and the first user logs in.

Preferably, the processor does not automatically put the job in the interruption state into the deletion state when the first user is not the predetermined specific user, the elapsed time after putting the job into the interruption state is equal to or longer than the predetermined time, and the first user logs in.

Preferably, the processor determines the specific user based upon an input.

Preferably, the processor determines the specific user based upon an input by a user including authority.

Preferably, the processor automatically puts the job in the interruption state into the deletion state when the first user is the predetermined specific user, and the elapsed time after putting the job into the interruption state is equal to or longer than the predetermined time, and a user is not logged in.

Preferably, the processor puts the job into the deletion state according to an input when the first user logs in.

Preferably, the processor restarts execution of the job according to an input when the first user logs in.

The device may further comprise an output device configured to inform that the job in the interruption state exists when the first user logs in.

The present invention also relates to a control method, comprising putting a job input by a first user into an interruption state when a specific condition is satisfied.

The method also comprising putting the job in the interruption state into a deletion state when an elapsed time after putting the job into the interruption state is equal to or longer than a predetermined time, and a second user different from the first user logs in.

Preferably, with the proviso that not automatically putting the job in the interruption state into the deletion state when the elapsed time after putting the job into the interruption state is equal to or longer than the predetermined time and the second user is not logged in.

The control method may further comprise automatically putting the job in the interruption state into the deletion state when the first user is a predetermined specific user, the elapsed time after putting the job into the interruption state is equal to or longer than the predetermined time, and the first user logs in.

According to the method, no automatically putting is carried out the job in the interruption state into the deletion state when the first user is not the predetermined specific user, the elapsed time after putting the job into the interruption state is equal to or longer than the predetermined time, and the first user logs in.

The control method may further comprise determining the specific user based upon an input.

The control method may further comprise determining the specific user based upon an input by a user including authority.

The control method may further comprise automatically putting the job in the interruption state into the deletion state when the first user is the predetermined specific user, and the elapsed time after putting the job into the interruption state is equal to or longer than the predetermined time, and a user is not logged in.

The control method may further comprise putting the job into the deletion state according to an input when the first user logs in.

The control method may further comprise restarting execution of the job according to an input when the first user logs in.

The control method may further comprise providing a notification that the job in the interruption state exists when the first user logs in.

The present invention also relates to an image forming apparatus, comprising: an image forming unit; and a printing control device, comprising: a processor which puts a job input by a first user into an interruption state when a specific condition is satisfied, and automatically puts the job in the interruption state into a deletion state when an elapsed time after putting the job into the interruption state is equal to or longer than a predetermined time and a second user different from the first user logs in.

Preferably, the processor does not automatically put the job in the interruption state into the deletion state when the elapsed time after putting the job into the interruption state is equal to or longer than the predetermined time and the second user is not logged in.

Hereinafter, an image forming device will be described with reference to the accompanying drawings. Further, in each drawing used for describing the following embodiment, a configuration may be omitted in some cases for the description.

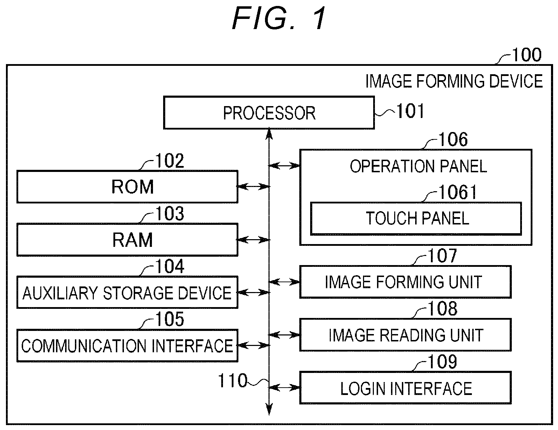

FIG. 1 is a block diagram illustrating an example of a main circuit configuration with respect to an image forming device 100 according to the embodiment.

The image forming device 100 is, for example, an MFP (multifunction peripheral), a copying machine, a printer or a facsimile, and the like. The image forming device 100 is provided with, for example, a printing function, a scanning function, a copying function, a decolorizing function, a facsimile function, and the like. The printing function is a function of forming an image on an image forming medium, and the like by using a recording material such as toner or ink, and the like. The image forming medium is, for example, sheet-like paper, and the like. The scanning function is a function of reading an image from an original document, and the like on which the image is formed. The copying function is a function of printing the image read from the original document, and the like by using the scanning function on the image forming medium by using the printing function. The decolorizing function is a function of decolorizing the image that is formed on the image forming medium using the decolorable recording material. The image forming device 100 includes, as an example, a processor 101, a ROM (read-only memory) 102, a RAM (random-access memory) 103, an auxiliary storage device 104, a communication interface 105, an operation panel 106, an image forming unit 107, an image reading unit 108, and a login interface 109. Those described above are connected to each other by a bus 110, and the like. Further, the image forming device 100 is an example of the printing control device.

The processor 101 corresponds to a central part of a computer that performs a process such as calculation, control, and the like necessary for an operation of the image forming device 100. The processor 101 controls each unit to achieve various functions of the image forming device 100, based upon a program such as system software, application software or firmware, and the like stored in the ROM 102 or the auxiliary storage device 104, and the like. Further, a part or the whole of the program may be incorporated in a circuit of the processor 101. For example, the processor 101 is a CPU (central processing unit), an MPU (micro processing unit), a SoC (system on a chip), a DSP (digital signal processor), a GPU (graphics processing unit), an ASIC (application specific integrated circuit), a PLD (programmable logic device) or an FPGA (field-programmable gate array), and the like. Alternatively, the processor 101 is a combination of a plurality of those described above. Further, the computer including the processor 101 as a center is an example of the printing control device.

The ROM 102 corresponds to a main storage device of the computer having the processor 101 as the center. The ROM 102 is a nonvolatile memory exclusively used for reading data. The ROM 102 stores the program. Further, the ROM 102 stores data or various setting values, and the like that are used for the processor 101 to perform various kinds of processes.

The RAM 103 corresponds to a main storage device of the computer having the processor 101 as the center. The RAM 103 is a memory used for reading and writing data. The RAM 103 is used as a so-called work area, and the like where data that are temporarily used for the processor 101 to perform various kinds of processes are stored.

The auxiliary storage device 104 corresponds to an auxiliary storage device of the computer having the processor 101 as the center. The auxiliary storage device 104 is, for example, an EEPROM (electric erasable programmable read-only memory), an HDD (hard disk drive), an SSD (solid state drive) or an eMMC (embedded MultiMedia Card), and the like. The auxiliary storage device 104 may also store the program. Further, the auxiliary storage device 104 stores the data used for the processor 101 to perform various kinds of processes, data generated by the process of the processor 101 or various kinds of setting values, and the like. Further, the image forming device 100 may be provided with an interface that allows storage medium such as a memory card or a USB (universal serial bus) memory, and the like to be inserted as the auxiliary storage device 104. The interface reads and writes information from and to the storage medium.

Further, the auxiliary storage device 104 stores a user DB (database). The user DB stores and administers information on a registered user of the image forming device 100. The user DB associates authentication information, authority information, and deletion information with a user ID.

The user ID is identification information uniquely imparted to each registered user.

The authentication information is information used in authentication related to a login process. The authentication information is used, for example, to determine whether a password is matched. Alternatively, the authentication information is used for biometric authentication.

The authority information is information indicating what kind of authority the associated user has.

When the deletion setting is valid, an interruption job is deleted regardless of a user who is being logged in. The deletion setting will be described later in detail. Further, a user whose deletion setting is valid is an example of a specific user.

The program stored in the ROM 102 or the auxiliary storage device 104 includes a program for executing a process which will be described later. As one example, the image forming device 100 is transferred to an administrator, and the like of the image forming device 100 in a state where the program is stored in the ROM 102 or the auxiliary storage device 104. However, the image forming device 100 may be transferred to the administrator, and the like in a state where the program is not stored in the ROM 102 or the auxiliary storage device 104. Further, the image forming device 100 may be transferred to the administrator, and the like in a state where a program different from the program is stored in the ROM 102 or the auxiliary storage device 104. Next, a program for executing a process which will be described later is separately transferred to the administrator, and the like, and may be written into the ROM 102 or the auxiliary storage device 104 under the operation by the administrator or a service man, and the like. The transfer of the program at this time can be achieved by recording the program on a removable storage medium such as, for example, a magnetic disk, a magneto-optical disk, an optical disk or a semiconductor memory, and the like, or by downloading the program via a network, and the like. The network is, for example, the Internet or a LAN. The communication interface 105 is an interface for the image forming device 100 to perform communication via the network, and the like.

The operation panel 106 is provided with a man-machine interface, and the like that performs input and output between the image forming device 100 and an operator of the image forming device 100. The operation panel 106 is provided with, for example, a button, a touch panel 1061, and the like for the operator to perform the operation. The touch panel 1061 is formed by, for example, laminating a display such as a liquid crystal display or an organic EL display, and the like and a pointing device input by touching. Therefore, the button and the touch panel 1061 function as an input device for receiving an operation by the operator. Further, the display provided in the touch panel 1061 functions as an output device for notifying the operator of various kinds of pieces of information.

The image forming unit 107 prints an image on the image forming medium in such a manner that the image is formed by using the recording material. The image forming unit 107 is provided with, for example, a printer of an electrophotographic system, an inkjet system or another type, and printing is performed by the printer.

The image reading unit 108 reads an image from an original document. The image reading unit 108 is provided with a scanner for reading the image from the original document. The scanner is, for example, an optical reduction system provided with an imaging element such as a CCD (charge-coupled device) image sensor, and the like. Alternatively, the scanner is a close contact sensor (CIS (contact image sensor)) provided with an imaging element such as a CMOS (complementary metal-oxide-semiconductor) image sensor, and the like. Alternatively, the scanner may be another well-known method. The login interface 109 is a device used for a login by a user. The login interface 109 is, for example, a card reader. The card reader reads information stored in an IC (integrated circuit) card, and the like. Alternatively, the login interface 109 is a sensor, and the like used for the biometric authentication. The sensor is used for reading, for example, a behavioral characteristic or a physical characteristic such as a fingerprint or a face, and the like of the operator.

The bus 110 includes a control bus, an address bus, a data bus, and the like, and transmits a signal transmitted and received by each unit of the image forming device 100.

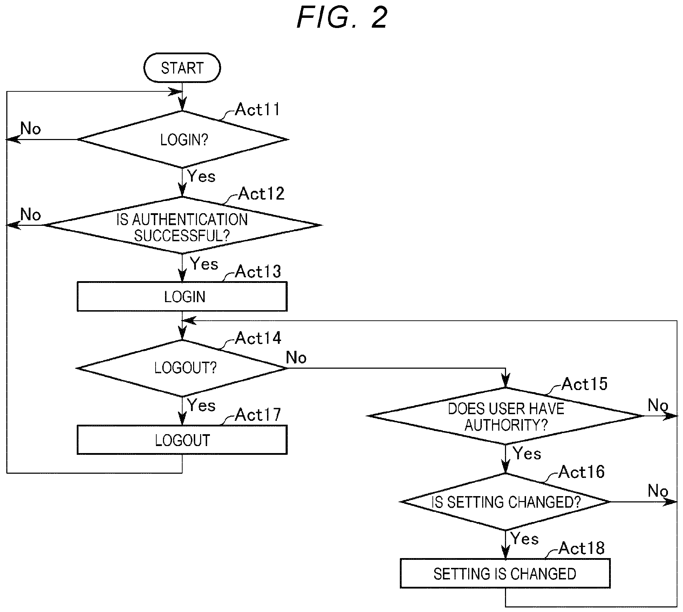

Hereinafter, an operation of the image forming device 100 according to the embodiment will be described based upon FIGS. 2 to 5, and the like. FIGS. 2 to 5 are flow charts illustrating an example of a process performed by the processor 101 of the image forming device 100. The processor 101 executes the process, for example, based upon the program stored in the ROM 102 or the auxiliary storage device 104, and the like. Further, contents of the process in the following operation descriptions are one example, and various processes capable of obtaining the same result can be appropriately used.

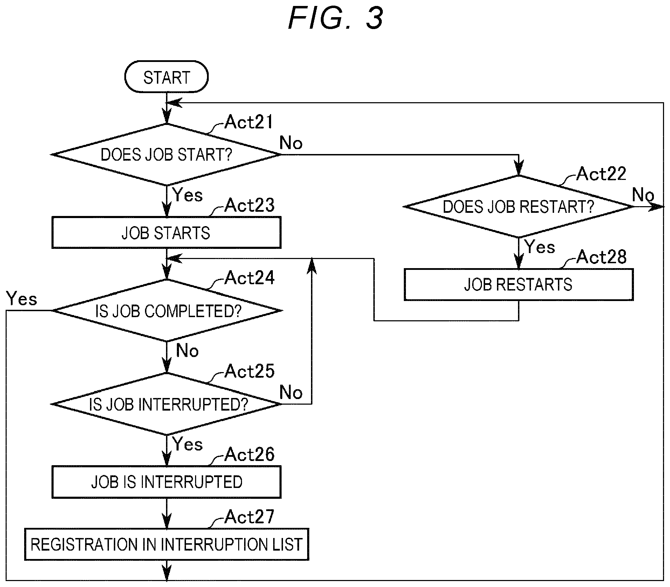

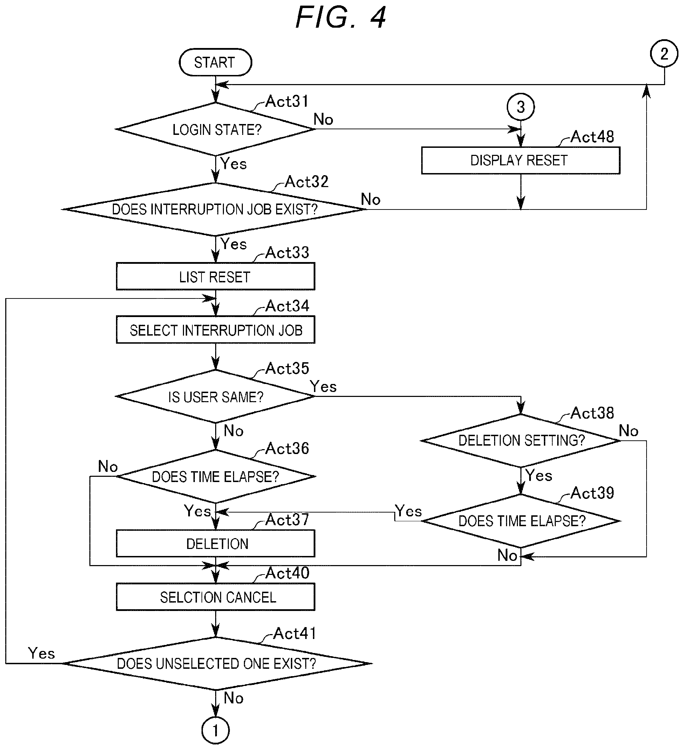

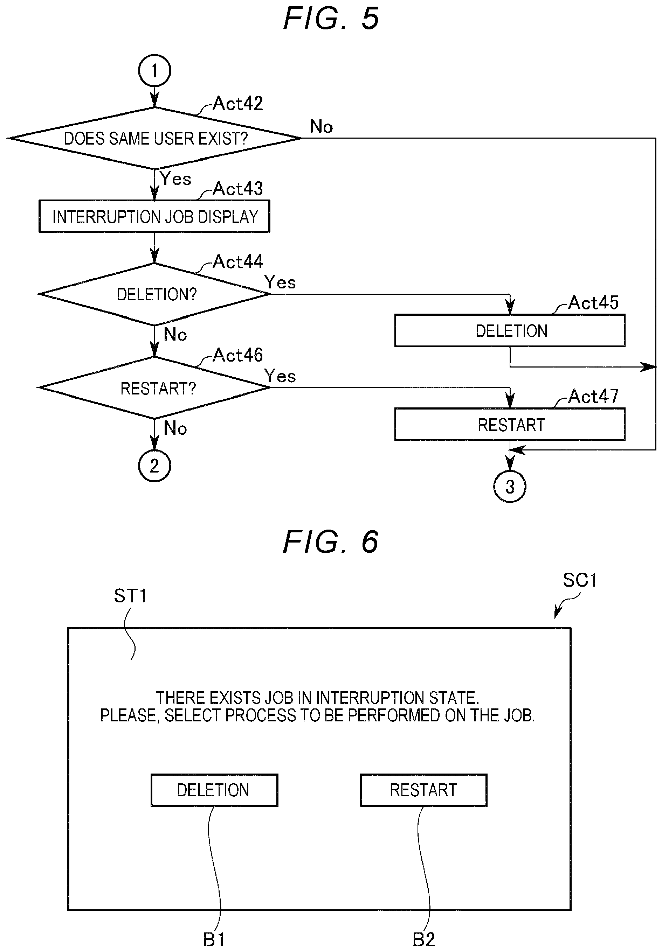

The processor 101 processes, for example, a process illustrated in FIG. 2, a process illustrated in FIG. 3, and processes illustrated in FIGS. 4 and 5 in parallel or in a row by multi-thread, multi-process, multi-task, and the like.

In ACT 11, the processor 101 waits for a login operation to be performed. An operator who wants to log in to the image forming device 100 performs, for example, the following login operation. That is, the operator operates, for example, the operation panel 106, and the like, and then inputs a user ID, a password, and the like. Alternatively, the operator allows the login interface 109 (the card reader) to read an IC card.

The IC card stores information required for the login such as the user ID, and the like. Further, alternatively, the operator may perform an operation for logging in to the login interface 109 by using the biometric authentication. Further, the image forming device 100 may automatically perform the biometric authentication according to a fact that the operator approaches a predetermined distance or closer. In this case, the processor 101 considers that the login operation is performed. When the login operation is performed, the processor 101 determines "Yes" in ACT 11, and then proceeds to ACT 12. In ACT 12, the processor 101 determines whether or not authentication related to the login is successful by using the authentication information stored in the user DB. For example, when the combination of the user ID and the password input in ACT 11 coincides with the combination stored in the user DB, the processor 101 determines that the authentication is successful. Alternatively, when the user ID, and the like read from the IC card in ACT 11 coincides with the user ID, and the like stored in the authentication information, the processor 101 determines that the authentication is successful. Alternatively, when a piece of biological information read in ACT 11 coincides with a piece of biological information stored in the authentication information by a certain amount or more, the processor 101 determines that the authentication is successful. When determining that the authentication is not successful, that is, when determining that the authentication fails, the processor 101 determines "No" in ACT 12, and then returns to ACT 11. On the other hand, when determining that the authentication is successful, the processor 101 determines "Yes" in ACT 12, and then proceeds to ACT 13.

In ACT 13, the processor 101 executes the login process. For example, the processor 101 stores which user is being logged in to the RAM 103, and the like. To this end, for example, the processor 101 substitutes the user ID of the user who is being logged in for a variable V1. Further, the user who is being logged in is hereinafter referred to as a "logged-in user". Further, the user ID of the user who is being logged in is hereinafter referred to as a "logged-in ID". The image forming device 100 becomes in a login state by the login process. Here, a fact that the image forming device 100 is in the login state indicates a state in which the user is being logged in to the image forming device 100.

In ACT 14, the processor 101 determines whether or not to log out. For example, when an operation that instructs to log out is performed, the processor 101 determines to log out. Further, when the non-operation time continues for a predetermined time or longer, the processor 101 determines to log out. When it is not determined to log out, the processor 101 determines "No" in ACT 14, and then proceeds to ACT 15.

In ACT 15, the processor 101 determines whether or not the logged-in user has change authority by referring to the authority information. The change authority is the authority capable of changing the deletion setting. For example, the processor 101 determines whether or not the logged-in user has the change authority by referring to the authority information associated with the logged-in ID. When the logged-in user does not have the change authority, the processor 101 determ ines "No" in ACT 15, and then returns to ACT 14. On the other hand, when the logged-in user has the change authority, the processor 101 determines "Yes" in ACT 15, and then proceeds to ACT 16.

In ACT 16, the processor 101 determines whether or not to change the deletion setting. For example, when an operation that instructs to change the deletion setting is performed, the processor 101 determines to change the deletion setting. When it is not determined to change the deletion setting, the processor 101 determines "No" in ACT 16, and then returns to ACT 14. Thus, when the logged-in user has the authority to change the deletion setting, the processor 101 repeats ACT 14 to ACT 17 until determining to log out or to change the deletion setting. On the other hand, when the logged-in user does not have the authority to change the deletion setting, the processor 101 repeats ACT 14 to ACT 17 until determining to log out.

When determining to log out while in a standby state of ACT 14 to ACT 17, the processor 101 determines "Yes" in ACT 14, and then proceeds to ACT 17.

In ACT 17, the processor 101 performs a logout process. That is, the processor 101 stores a fact that the user is not being logged in in the RAM 103. For example, the processor 101 clears the value of the variable V1. The image forming device 100 becomes a non-login state by the logout process. In this case, the non-login state indicates a state in which the login is not performed in the image forming device 100. After the process of ACT 17, the processor 101 returns to ACT 11.

When determining to change the deletion setting while in the standby state of ACT 14 to ACT 16, the processor 101 determines "Yes" in ACT 16, and then proceeds to ACT 18.

In ACT 18, the processor 101 changes the deletion setting according to the operation contents (switches between validity and invalidity). For example, the user who can be changed is different, depending on the authority the logged-in user has. For example, when the user is an administrator user, the user can change the deletion settings of all users. Meanwhile, for example, when the user is a general user, the user can only change the deletion setting of the logged-in user. Further, for example, when the user is a guest user, since the guest user does not have the change authority, "No" is determined in ACT 15. Types of the users such as the administrator user, the general user, the guest user, and the like are indicated by, for example, the authority information. After the process of ACT 18, the processor 101 returns to ACT 14.

In ACT 21 of FIG. 3, the processor 101 determines whether or not to start a job. For example, when an input that instructs to execute the job is performed, the processor 101 determines to start the job. Further, the job includes various kinds of jobs such as a printing job, a scanning job, a copying job, a decolorizing job, and a facsimile job, and the like depending on the contents. When it is not determined to start the job, the processor 101 determines "No" in ACT 21, and then proceeds to ACT 22.

In ACT 22, the processor 101 determines whether or not to restart the job. The process of ACT 22 will be described later in detail. When it is not determined to restart the job, the processor 101 determines "No" in ACT 22, and then returns to ACT 21. Thus, the processor 101 repeats ACT 21 and ACT 22 until it is determined to start the job or to restart the job.

When determining to start the job while in the standby state of ACT 21 and ACT 22, the processor 101 determines "Yes" in ACT 21, and then proceeds to ACT 23.

In ACT 23, the processor 101 controls each unit so as to start the execution of the job corresponding to the input contents.

In ACT 24, the processor 101 determines whether or not the job in the process of being executed is completed. When the job in the process of being executed is not completed, the processor 101 determines "No" in ACT 24, and then proceeds to ACT 25.

In ACT 25, the processor 101 determines whether or not to interrupt the job in the process of being executed. When a specific condition is satisfied, the processor 101 determines to interrupt the job. When the job in the process of being executed is the printing job, for example, the processor 101 determines to interrupt the job when an image forming medium of a type designated by the job is not set in the image forming device 100. The above-mentioned type is a size, and the like. Further, when the job in the process of being executed is the printing job, for example, the processor 101 determines to interrupt the job when printing cannot be performed in a size designated by the job. Further, when various other specific conditions are satisfied, the processor 101 determines to interrupt the job. When it is not determined to interrupt the job in the process of being executed, the processor 101 determines "No" in ACT 25, and then returns to ACT 24. Thus, the processor 101 repeats ACT 24 and ACT 25 until the job in the process of being executed is completed or it is determined to interrupt the job in the process of being executed.

When the job in the process of being executed is completed while in the standby state of ACT 24 and ACT 25, the processor 101 determines "Yes" in ACT 24, and then returns to ACT 21.

When determining to interrupt the job in the process of being executed while in the standby state of ACT 24 and ACT 25, the processor 101 determines "Yes" in ACT 25, and then proceeds to ACT 26.

In ACT 26, the processor 101 interrupts the job in the process of being executed.

In ACT 27, the processor 101 registers the job interrupted in ACT 26 in an interruption list storing a list of the job in the process of being interrupted (hereinafter referred to as an "interruption job"). That is, the processor 101 stores a job ID of the job interrupted in ACT 26 in the interruption list. Further, the processor 101 associates the logged-in ID and the date and time when the job is interrupted (hereinafter referred to as "interruption date and time") with the job ID. Further, the interruption list is stored in, for example, the RAM 103 or the auxiliary storage device 104. Further, the job ID is identification information uniquely imparted to each job. After the process ACT 27, the processor 101 returns to ACT 21.

In ACT 31 of FIG. 4, the processor 101 determines whether or not the image forming device 100 is in the login state. When the image forming device 100 is in the login state, the processor 101 determines "Yes" in ACT 31, and then proceeds to ACT 32.

In ACT 32, the processor 101 determines whether or not there exists the interruption job by referring to the interruption list. When no interruption job exists, the processor 101 determines "No" in ACT 32, and then returns to ACT 31. On the other hand, when there exists the interruption job, the processor 101 determines "Yes" in ACT 32, and then proceeds to ACT 33.

In ACT 33, the processor 101 puts all the interruption jobs registered in the interruption list into an unselected state. Further, when there exists the interruption job in the process of being selected, the processor 101 cancels selection.

In ACT 34, the processor 101 selects one of the interruption jobs in the unselected state among the interruption jobs registered in the interruption list. Further, the processor 101 puts the selected interruption job into a selection completed state. For example, the processor 101 selects an interruption job having the interruption date and time of which is the oldest. Alternatively, for example, the processor 101 selects an interruption job having the time up to an automatic deletion time of which is the shortest. The automatic deletion time is the time until the interruption job is automatically deleted. The interruption job is automatically deleted when the automatic deletion time elapses and a predetermined condition is satisfied. The predetermined condition is described in this specification. For example, a length of the automatic deletion time is set by an administrator or a designer, and the like of the image forming device 100. Further, the length of the automatic deletion time may be different depending on the type of the job. Further, the processor 101 may select the interruption job regardless of the interruption date and time and the automatic deletion time. Further, here, the job that is selected by the processor 101 and is in the process of being selected is referred to as a "selected job".

In ACT 35, the processor 101 determines whether or not an execution user of the selected job is the same as the logged-in user. The execution user is a user who inputs the job to the image forming device 100 and is an execution person of the job. The user ID associated with the selected job in the interruption list indicates the execution user of the selected job. That is, the processor 101 determines whether or not the execution user of the selected job is the same as the logged-in user by determining whether or not the user ID associated with the selected job is the same as the logged-in ID. When the execution user of the selected job is not the same as the logged-in user, the processor 101 determines "No" in ACT 35, and then proceeds to ACT 36.

In ACT 36, the processor 101 determines whether or not the elapsed time from the interruption date and time of the selected job is equal to or longer than the automatic deletion time. When the elapsed time from the interruption date and time of the selected job is equal to or longer than the automatic deletion time, the processor 101 determines "Yes" in ACT 36, and then proceeds to ACT 37. In ACT 37, the processor 101 puts the selected job into the deletion state. That is, for example, the processor 101 deletes the selected job from the RAM 103, the auxiliary storage device 104, and the like. Additionally, for example, the processor 101 moves the selected job to a folder, and the like indicating that the job is deleted. Further, for example, the processor 101 imparts metadata such as a tag, and the like indicating that the job is deleted to the selected job. Further, the processor 101 cancels registration of the selected job put into the deletion state from a deletion list by deleting the selected job put into the deletion state therefrom.

Further, when the execution user of the selected job is the same as the logged-in user, the processor 101 determines "Yes" in ACT 35, and then proceeds to ACT 38.

In ACT 38, the processor 101 determines whether or not the deletion setting of the logged-in user is valid. When the deletion setting of the logged-in user is valid, the processor 101 determines "Yes" in ACT 38, and then proceeds to ACT 39.

In ACT 39, the processor 101 determines whether or not the elapsed time from the interruption date and time of the selected job is equal to or longer than the automatic deletion time. When the elapsed time from the interruption date and time of the selected job is equal to or longer than the automatic deletion time, the processor 101 determines "Yes" in ACT 39, and then proceeds to ACT 37. In ACT 36, when the elapsed time from the interruption date and time of the selected job is not equal to or longer than the automatic deletion time, the processor 101 determines "No", and then proceeds to ACT 40. Further, the processor 101 proceeds to ACT 40 after ACT 37. Further, when the deletion setting of the logged-in user is valid in ACT 38, the processor 101 determines "No", and then proceeds to ACT 40. When the elapsed time from the interruption date and time of the selected job is not equal to or longer than the automatic deletion time in ACT 39, the processor 101 determines "No", and then proceeds to ACT 40.

In ACT 40, when there exists the interruption job in a selected state, the processor 101 cancels the selection with respect to the interruption job.

In ACT 41, the processor 101 determines whether or not there exists the interruption job in the unselected state in the interruption list. When there exists the interruption job in the unselected state in the interruption list, the processor 101 determines "Yes" in ACT 41, and then returns to ACT 34. As described above, the processor 101 repeats the processes of ACT 34 to ACT 41. Accordingly, the processor 101 executes the processes indicated in ACT 35 to ACT 40 for each deleted job registered in the interruption list.

When there exists no interruption job in the unselected job in the interruption list, the processor 101 determines "No" in ACT 41, and then proceeds to ACT 42 of FIG. 5.

In ACT 42, the processor 101 determines whether or not there exists the interruption job in which the execution user and the logged-in user are the same as each other in the interruption job registered in the interruption list. When there exists the interruption job in which the execution user is the same as the logged-in user, the processor 101 determines "Yes" in ACT 42, and then proceeds to ACT 43.

In ACT 43, the processor 101 generates an image corresponding to a selection screen SC1 as illustrated in FIG. 6. The processor 101 instructs the touch panel 1061 to display the generated image. The touch panel 1061 receives the instruction and displays the selection screen SC1.

FIG. 6 illustrates an example of the selection screen SC1 displayed on the touch panel 1061. The selection screen SC1 includes, as an example, a character string ST1, a deletion button B1, and a restart button B2.

The character string ST1 includes, for example, a content indicating that there exists the interruption job. Further, the character string ST1 indicates a content of instructing to select what type of operation to be performed with respect to the interruption job. The character string ST1 includes, as an example, "There exists a job in the interruption state. Please select a process to be performed on the job".

The deletion button B1 is a button to be operated by the logged-in user when deleting the interruption job.

The restart button B2 is a button to be operated by the logged-in user when restarting the execution of the interruption job.

In ACT 44, the processor 101 determines whether or not an operation that instructs to delete the interruption job is performed. That is, the processor 101 determines whether or not a predetermined operation such as an operation of the deletion button B1, and the like is performed. When the operation that instructs to delete the interruption job is performed, the processor 101 determines "Yes" in ACT 44, and then proceeds to ACT 45.

In ACT 45, the processor 101 puts the interruption job in which the execution user is the same as the logged-in user into the deletion state. Further, the processor 101 cancels the registration of the interruption job put into the deletion state from the interruption list by, for example, deleting the interruption job put into the deletion state therefrom.

On the other hand, when the operation that instructs to delete the interruption job is not performed, the processor 101 determines "No" in ACT 44 of FIG. 5, and then proceeds to ACT 46.

In ACT 46, the processor 101 determines whether or not the operation that instructs to restart the execution of the interruption job is performed. That is, the processor 101 determines whether or not a predetermined operation such as an operation of the restart button B2, and the like is performed. On the other hand, when the operation that instructs to restart the execution of the interruption job is not performed, the processor 101 determines "No" in ACT 46, and then returns to ACT 31 of FIG. 4. When the operation that instructs to restart the execution of the interruption job is performed, the processor 101 determines "Yes" in ACT 46 of FIG. 5, and then proceeds to ACT 47.

In ACT 47, the processor 101 inputs an instruction to restart the execution of the interruption job to the process illustrated in the flow chart in FIG. 3. According to the aforementioned input, the processor 101 determines to restart the job. When determining to restart the job while in the standby state of ACT 21 and ACT 22, the processor 101 determines "Yes" in ACT 22, and then proceeds to ACT 28.

The processor 101 controls each unit in ACT 28 so as to restart the execution of the interruption job in which the execution user is the same as the logged-in user. Further, the processor 101 cancels the registration of the restarted interruption job from the deletion list by, for example, deleting the restarted interruption job therefrom. After the process of ACT 28, the processor 101 proceeds to ACT 24.

When the image forming device 100 is not in the login state, the processor 101 determines "No" in ACT 31 of FIG. 4, and then proceeds to ACT 48. Further, when there exists no interruption job in which the execution user is the same as the logged-in user, the processor 101 determines "No" in ACT 42 of FIG. 5, and then proceeds to ACT 48 of FIG. 4. Then, after the process of ACT 45 or ACT 47, the processor 101 proceeds to ACT 48 of FIG. 4.

In ACT 48, the processor 101 instructs the touch panel 1061 to terminate the display of the selection screen SC1. When receiving the aforementioned instruction, the touch panel 1061 terminates the display of the selection screen SC1. Further, when the selection screen SC1 is not displayed on the touch panel 1061, the processor 101 skips the process. After the process of ACT 48, the processor 101 returns to ACT 31.

As described above, when not in the login state, the processor 101 waits for the login state by repeating ACT 31.

When the interruption job exists; the user different from the execution user of the interruption job is being logged in; and the elapsed time from the interruption date and time of the interruption job is equal to or longer than the automatic deletion time, the image forming device 100 according to the embodiment automatically puts the interruption job into the deletion state. Here, automatically putting the interruption job into the deletion state means that the image forming device 100 puts the interruption job into the deletion state without triggering an operation by the operator, and the like. Accordingly, the interruption job unnecessary for the logged-in user is deleted.

Further, when the interruption job exists; the user same as the execution user of the interruption job is being logged in; and the elapsed time from the interruption date and time of the interruption job is equal to or longer than the automatic deletion time, the image forming device 100 according to the embodiment does not automatically put the interruption job into the deletion state. Accordingly, the image forming device 100 according to the embodiment can prevent the interruption job from being unintentionally deleted. Further, with respect to the interruption job in which the user whose deletion setting is valid is the execution user, even though the same user as the execution user is being logged in, when the elapsed time from the interruption date and time of the interruption job is equal to or longer than the automatic deletion time, the image forming device 100 according to the embodiment automatically puts the interruption job into the deletion state. Accordingly, the image forming device 100 according to the embodiment can delete a job that is executed by a user such as a guest user, and the like having a low possibility of restarting the interruption job without waiting for another user to log in.

Further, the image forming device 100 according to the embodiment can switch between the validity of the deletion setting and the invalidity thereof.

Further, switching between the validity of the deletion setting and the invalidity thereof can be performed when the user having the authority is being logged in. Accordingly, the image forming device 100 according to the embodiment can prevent the deletion setting from being changed by a user such as a guest user who is not allowable to change the deletion setting. Further, when the interruption job exists and the user same as the execution user of the interruption job is being logged in, the image forming device 100 according to the embodiment informs that there exists the interruption job. Accordingly, the logged-in user can know that there exists the interruption job. Further, when the interruption job exists and the same user as the execution user of the interruption job is being logged in, the image forming device 100 according to the embodiment deletes the interruption job according to an operation input. Accordingly, the logged-in user can delete the interruption job which is not automatically deleted.

Further, when the interruption job exists and the same user as the execution user of the interruption job is being logged in, the image forming device 100 according to the embodiment restarts the execution of the interruption job according to the operation input. Accordingly, the logged-in user can restart the execution of the interruption job which is not automatically deleted.

The above-mentioned embodiment can be modified as follows.

In the embodiment described above, even though there exists the interruption job, when a user other than the execution user of the interruption job is the logged-in user, the image forming device 100 can execute a job other than the interruption job. However, when there exists the interruption job, the image forming device 100 may not be able to execute the job other than the interruption job.

When a user different from the execution user of the interruption job logs in, the image forming device 100 may put the interruption job into the deletion state regardless of the elapsed time from the interruption date and time.

In the embodiment described above, the image forming device 100 informs that there exists the interruption job by displaying the existence of the interruption job on the display in ACT 43. However, the image forming device 100 may inform that there exists the interruption job by another method.

For example, the image forming device 100 outputs a voice indicating that there exists the interruption job from a speaker. The speaker is an output device for notifying the operator of various kinds of information.

With respect to the interruption job in which the user whose deletion setting is valid is the execution user, even in the non-login state, when the elapsed time from the interruption date and time exceeds the automatic deletion time, the image forming device 100 may automatically delete the interruption job. Accordingly, the image forming device 100 according to the embodiment can delete the job that is executed by the user such as the guest user, and the like having the low possibility of restarting the interruption job without waiting for another user to log in.

The processor 101 may implement a part or the whole of processes performed by the program in the embodiment described above by a hardware configuration of a circuit.

While certain embodiments have been described, these embodiments have been presented by way of example only, and are not intended to limit the scope of the inventions. Indeed, the novel apparatus and methods described herein may be embodied in a variety of other forms; furthermore, various omissions, substitutions and changes in the form of the apparatus and methods described herein may be made without departing from the scope of the inventions. The accompanying claims and their equivalents are intended to cover such forms or modifications as would fall within the scope of the inventions.

## Claims

1. A printing control device, comprising:
a processor configured to put a job input by a first user into an interruption state when a specific condition is satisfied, and automatically put the job in the interruption state into a deletion state when an elapsed time after putting the job into the interruption state is equal to or longer than a predetermined time and a second user different from the first user logs in.

2. The device according to claim 1, wherein
the processor does not automatically put the job in the interruption state into the deletion state when the elapsed time after putting the job into the interruption state is equal to or longer than the predetermined time and the second user is not logged in.

3. The device according to claim 1 or 2, wherein
the processor automatically puts the job in the interruption state into the deletion state when the first user is a predetermined specific user, the elapsed time after putting the job into the interruption state is equal to or longer than the predetermined time, and the first user logs in, and
the processor does not automatically put the job in the interruption state into the deletion state when the first user is not the predetermined specific user, the elapsed time after putting the job into the interruption state is equal to or longer than the predetermined time, and the first user logs in.

4. The device according to claim 3, wherein
the processor determines the specific user based upon an input.

5. The device according to claim 4, wherein
the processor determines the specific user based upon an input by a user including authority.

6. The device according to claim 3, wherein
the processor is configured to automatically put the job in the interruption state into the deletion state when the first user is the predetermined specific user, and the elapsed time after putting the job into the interruption state is equal to or longer than the predetermined time, and a user is not logged in.

7. The device according to any one of claims 1 to 6, wherein
the processor puts the job into the deletion state according to an input when the first user logs in.

8. The device according to any one of claims 1 to 7, wherein
the processor restarts execution of the job according to an input when the first user logs in.

9. The device according to any one of claims 1 to 8, further comprising:
an output device configured to inform that the job in the interruption state exists when the first user logs in.

10. A control method, comprising:
putting a job input by a first user into an interruption state when a specific condition is satisfied; and
putting the job in the interruption state into a deletion state when an elapsed time after putting the job into the interruption state is equal to or longer than a predetermined time, and a second user different from the first user logs in.

11. The control method according to claim 10, with the proviso that not automatically putting the job in the interruption state into the deletion state when the elapsed time after putting the job into the interruption state is equal to or longer than the predetermined time and the second user is not logged in.

12. The control method according to claim 10 or 11, further comprising:
automatically putting the job in the interruption state into the deletion state when the first user is a predetermined specific user, the elapsed time after putting the job into the interruption state is equal to or longer than the predetermined time, and the first user logs in, and
not automatically putting the job in the interruption state into the deletion state when the first user is not the predetermined specific user, the elapsed time after putting the job into the interruption state is equal to or longer than the predetermined time, and the first user logs in.

13. The control method according to claim 12, further comprising:
determining the specific user based upon an input.

14. The control method according to claim 13, further comprising:
determining the specific user based upon an input by a user including authority.

15. An image forming apparatus, comprising:
an image forming unit; and
a printing control device according to any one of claims 1 to 9.
